Europäisches Patentamt

European Patent Office

Office européen des brevets

(11) Veröffentlichungsnummer : **0 120 133**
**B1**

(12) EUROPÄISCHE PATENTSCHRIFT

(45) Veröffentlichungstag der Patentschrift :
19.08.87

(21) Anmeldenummer : 83112684.2

(22) Anmeldetag : 16.12.83

(51) Int. Cl.⁴ : **C 08 L 77/00// C08K5/34, C08L59/02**

(54) **Brandwidrig ausgerüstete Polyamidformmassen.**

(30) Priorität : 28.12.82 DE 3248330

(43) Veröffentlichungstag der Anmeldung :
03.10.84 Patentblatt 84/40

(45) Bekanntmachung des Hinweises auf die Patenterteilung : 19.08.87 Patentblatt 87/34

(84) Benannte Vertragsstaaten :
CH DE FR GB IT LI NL

(56) Entgegenhaltungen :
FR-A- 2 004 073
CHEMICAL ABSTRACTS, Band 85, 1976, Seite 40, Nr. 124942h, Columbus, Ohio, USA
CHEMICAL ABSTRACTS, Band 84, 1976, Seite 53, Nr. 60701y, Columbus, Ohio, USA -

(73) Patentinhaber : BAYER AG
Konzernverwaltung RP Patentabteilung
D-5090 Leverkusen 1 Bayerwerk (DE)

(72) Erfinder : Bonten, Heinz
An der Heimstätte 23
D-4150 Krefeld (DE)
Erfinder : Nielinger, Werner, Dr.
Bärenstrasse 21
D-4150 Krefeld 1 (DE)
Erfinder : Michael, Dietrich, Dr.
Deswatinesstrasse 57
D-4150 Krefeld (DE)
Erfinder : Haupt, Heinrich, Dr.
Bodelschwinghstrasse 15
D-4150 Krefeld (DE)

Jouve, 18, rue St-Denis, 75001 Paris, France

**Beschreibung**

Gegenstand der Erfindung sind Polyamide, die mit einer Kombination aus Melamin und Polyacetalen brandwidrig ausgerüstet sind.

In jüngster Zeit gewinnen brandwidrig ausgerüstete, halogenfreie Polyamide, die auch eine helle Farbeinstellung möglich machen, zur Herstellung von Spritzgießteilen für den Elektrosektor immer mehr an Bedeutung. Insbesondere Melamin hat sich in unverstärkten und mit Glasfasern verstärkten Polyamiden als Brandschutzmittel bewährt (Ja-PS 47-1714 und DE-PS 18 03 606). Ein Nachteil der so brandwidrig ausgerüsteten Polyamide ist jedoch, daß das Melamin — insbesondere in einer Atmosphäre mit hohem Feuchtigkeitsgehalt — an die Oberfläche der Formkörper migriert und dort unansehnliche Beläge bilden kann. Dies kann bei Elektrospritzgußteilen zu einer Verschmierung der Kontakte führen. Es hat daher nicht an Versuchen gefehlt, die Migration des Melamins zu beseitigen, indem man beispielsweise das Melamin als Salz einer anorganischen Säure oder als Reaktionsprodukt mit Triazolidin-3,5-dionen oder Barbitursäurederivaten und Formaldehyd einsetzt. Polyamide, die diese Brandschutzmittel enthalten, können jedoch wegen ihrer geringen thermischen Belastbarkeit nur bei niedrigeren Temperaturen kompoundiert und verarbeitet werden. Daher sind dünnwandige, kompliziert gebaute Formteile nicht immer einwandfrei herstellbar.

Es wurde nun überraschenderweise gefunden, daß man die Migration des Melamins ohne wesentliche Beeinträchtigung des Verarbeitungs- und Brandverhaltens erheblich vermindern kann, wenn man den Formmassen Polyacetale zusetzt.

Gegenstand der Erfindung sind daher Polyamidformmassen, die 10-18, vorzugsweise 12-16 Gew.-%, bezogen auf die gesamte Formmasse, Melamin und 1-7, vorzugsweise 3-5 Gew.-%, bezogen auf die gesamte Formmasse, wenigstens eines thermoplatischen Polyacetals enthalten.

Die unter Zusatz eines Polyacetals hergestellten Formmassen lassen sich problemlos zu dünnwandigen und komplizierten Formteilen, vorzugsweise durch Spritzgießen, verarbeiten. Die Migration des Melamins ist durch den Zusatz des Polyacetals weitgehend unterdrückt. Die Ausblüherscheinungen sind deutlich geringer als bei alleiniger Verwendung von Melamin.

Für die Herstellung der erfindungsgemäßen Formmassen geeignete Polyamide sind solche, die nach bekannten Polykondensationsverfahren ausgehend von Diaminen und Dicarbonsäuren und/oder Lactamen mit wenigstens 5 Ringgliedern oder entsprechenden ω-Aminosäuren hergestellt werden können. Als Ausgangsprodukte kommen aliphatische und aromatische Dicarbonsäuren wie Adipinsäure, 2,2,4- und 2,4,4-Trimethyladipinsäure, Azelainsäure, Sebazinsäure, Decandicarbonsäure, Dodecandicarbonsäure, Isophthalsäure, Terephthalsäure, aliphatische und aromatische Diamine wie Hexamethylendiamin, 2,2,4- und 2,4,4-Trimethylhexamethylendiamin, die isomeren Diamino-dicyclohexyl-methane, Di-amino-dicyclohexyl-propane, Isophorondiamin, die isomeren Xylylendiamine, Bis-aminomethyl-cyclohexan, Aminocarbonsäuren wie $\varepsilon$-Aminocapronsäure, $\omega$-Aminoundecansäure, $\omega$-Aminolaurinsäure bzw. die entsprechenden Lactame in Betracht. Selbstverständlich sind Copolyamide aus mehreren der genannten Monomeren eingeschlossen sowie Mischungen der genannten Polyamide.

Bevorzugte Polyamide sind Polyamid-6 und Polyamid-6,6. Insbesonders bevorzugt wird Polyamid-6,6 eingesetzt.

Als thermoplatische Polyacetale werden vorzugsweise Verbindungen eingesetzt, wie sie in Kirk-Othmer, Encyclopedia of Chemical Technology, Second Edition Vol 1, 95-105, Wiley & Sons Inc. New York 1963 beschrieben sind. Insbesondere sind dies Polyformaldehyde und Copolymerisate des Formaldehyds mit 0,1-20 Gew.-%, vorzugsweise 0,5-10 Gew.-%, bezogen auf das Copolymerisat, weiterer copolymerisierbarer Verbindungen, vorzugsweise cyclische Ether mit $C_2$-$C_{10}$ im Ring wie z. B. Epoxide, bevorzugt Ethylenoxid und/oder Epichlorhydrin, oder cyclische Formale mit wenigstens 2 Sauerstoffatomen und $C_2$-$C_5$ im Ring wie z. B. 1,3-Dioxolan oder 5-Phenyl-1,3-Dioxolan. Die thermoplastischen Polyacetale sollten vorzugsweise Schmelzindices im Bereich von 1-30 aufweisen.

Die Herstellung der erfindungsgemäßen Polyamidformmassen erfolgt vorzugsweise durch Mischen des Melamins und des Polyacetals mit dem Polyamid in Ein- oder Doppelwellenextrudern herkömmlicher Bauart in der Polyamidschmelze. Man kann dazu die Komponenten vor der Extrusion mischen oder in das bereits geschmolzene Polyamid dosieren.

Es ist auch möglich, Konzentrate der Additive in Polyamid einzusetzen oder Melamin-haltiges Polyamid mit dem Polyacetal zu mischen und diese Mischung in einer handelsüblichen Spritzgießmaschine zu verarbeiten.

Weiterhin ist es auch möglich, die beiden Komponenten der Flammschutzkombination vor ihrer Einarbeitung miteinander zu mischen, ggf. im geschmolzenen Zustand.

Die brandwidrig ausgerüsteten Polyamidformmassen können zusätzlich die üblichen Additive, Füllstoffe und/oder Verstärkungsmittel enthalten wie z. B. Entformungsmittel, Fließmittel, Stabilisatoren, Farbstoffe, Pigmente, Silikate, Kreide, Quarz, Glasfasern, Glaskugeln in üblichen Mengen. Vorzugsweise sind sie faserverstärkt, besonders bevorzugt glasfaserverstärkt in Mengen von 10-60 Gew.-%, bezogen auf die Formmasse, vorzugsweise werden die Füllstoffe oder Faserverstärkungsmaterialien in Mengen von 20-40 Gew.-% zugegeben.

Die Polyamide eignen sich vorzüglich zur Herstellung von Formkörpern, die im Elektrosektor

2

eingesetzt werden und bei denen eine gute Oberfläche erwünscht ist, wie sichtbare Gehäuse oder Abdeckungen.

Beispiele 1-7

In einem Doppelwellenextruder vom Typ ZSK 32 der Firma Werner und Pfleiderer wird Polyamid 66 (relative Viskosität 3,0, gemessen an einer einprozentigen Lösung in m-Kresol) mit Melamin und verschiedenen Polyacetalen (Hostaforme [R] der Firma Hoechst AG) bei einer Temperatur von 274-280 °C und einem Durchsatz von 10 kg/h gemischt. Die Mischung wird als Borste in einem Wasserbad abgekühlt. Nach dem Granulieren und Trocknen wird die Mischung zu Prüfkörpern verarbeitet.

Die Zusammensetzung der Mischung, die Schmelzindices der eingesetzten Polyacetale und die Prüfergebnisse gehen aus der folgenden Tabelle 1 hervor.

Der Versuch 8 ist ein Vergleichsversuch ohne Zusatz von Polyacetal.

Im Brennbarkeitstest nach Underwriters Laboratories Subj. 94 sind die Produkte mit einer Dicke von 1/8″ (3,2 mm) und 1/16″ (1,6 mm) VO.

Der Schmelzindex MFI wurde gemäß DIN 53 735 in g/10 min bestimmt.

(Siehe Tabelle 1 Seite 4 f.)

## Tabelle 1

| Versuch | | | | 1 | 2 | 3 | 4 | 5 | 6 | 7 | 8* |
|---|---|---|---|---|---|---|---|---|---|---|---|
| | MFI 190/2,16 | | | | | | | | | | |
| Polyamid 66 | | | Gew.-% | 83 | 82 | 81 | 83 | 82 | 83 | 82 | 86 |
| Melamin | | | Gew.-% | 14 | 14 | 14 | 14 | 14 | 14 | 14 | 14 |
| Polyacetal | | 9 | Gew.-% | 3 | 4 | 5 | | | | | — |
| Polyacetal | | 27 | Gew.-% | | | | 3 | 4 | | | — |
| Polyacetal | | 1 | Gew.-% | | | | | | 3 | 4 | — |
| Schlagzähigkeit | DIN 53 453 | | kJ/m² | 29,6 | 33,3 | 30,5 | 31,6 | 37,6 | 34,0 | 34,8 | 32,2 |
| Kerbschlagzähigkeit | DIN 53 453 | | kJ/m² | 2,8 | 3,2 | 3,3 | 3,1 | 3,5 | 3,1 | 3,0 | 2,7 |
| Grenzbiegespannung | DIN 53 452 | | MPa | 123 | 120 | 119 | 125 | 120 | 126 | 124 | 127 |
| Migration des Melamins nach Stunden | | | | 18 | 22 | 24 | 22 | 26 | 18 | 20 | 6 |
| Brandverhalten nach | | | | | | | | | | | |
| UL Subj. 94 | 1,6 mm | | | VO | VO | VO | VO | VO | VO | VO | VO |
| | 3,2 mm | | | VO | VO | VO | VO | VO | VO | VO | VO |

*Vergleichsbeispiel

0 120 133

Zur Beurteilung der Migration des Melamins werden die Formkörper bei 40 °C in wasserdampfgesättigter Atmosphäre (Tropenklima) gelagert und der Zeitpunkt des Auftretens des esten Ausblühens des Melamins in der Tabelle 1 angegeben.

Beispiele 9-13

Es wurden Polyamid 66, Melamin und die in der Tabelle angegebenen Mengen Polyacetal mit einem Schmelzindex von 9 (Hostaform C 9021 ®) in den in der Tabelle 2 angegebenen Mengenverhältnissen in einem Doppelwellenextruder vom Typ ZSK 53 der Fa. Werner und Pfleiderer gemischt. Die Massetemperatur betrug 275 °C, der Durchsatz 50 kg/h.

Tabelle 2

| Beispiel | Polyamid-66 % | Melamin % | Polyacetal % | UL-Test 6,4mm | UL-Test 3,2mm | UL-Test 1,6mm | Migration h |
|---|---|---|---|---|---|---|---|
| 9* | 86 | 14 | – | VO | VO | VO | 6 |
| 10 | 83 | 14 | 3 | VO | VO | VO | 16 |
| 11 | 82 | 14 | 4 | VO | VO | VO | 22 |
| 12 | 81 | 14 | 5 | VO | VO | VO | 24 |
| 13* | 76 | 14 | 10 | V2 | V2. | V2 | 16 |

*Vergleichsbeispiel

## Patentansprüche

1. Flammfeste, ggf. verstärkte und/oder gefüllte Polyamidformmassen, die als Flammschutzmittelkombination

I  10-18 Gew.-%, bezogen auf die Formmasse, Melamin und

II  1- 7 Gew.-%, bezogen auf die Formmasse, wenigstens eines thermoplastischen Polyacetals und

gegebenenfalls die üblichen Hilfs- und Zuschlagstoffe enthalten.

2. Polyamidformmassen nach Anspruch 1, dadurch gekennzeichnet, daß sie

12-16 Gew.-% der Komponente I und
3- 5 Gew.-% der Komponente II

enthalten.

3. Polyamidformmassen nach Anspruch 1 oder 2, dadurch gekennzeichnet, daß die Komponente II ein Polyformaldehyd oder ein Copolymerisat des Formaldehyds mit cyclischen Ethern oder cyclischen Formalen, ist.

4. Polyamidformmassen nach Ansprüchen 1-3, dadurch gekennzeichnet, daß die Komponente II ein Copolymerisat des Formaldehyds mit einem Epoxid oder einem cyclischen Formal mit wenigstens 2 O-Atomen und $C_2$-$C_5$ im Ring ist.

5. Polyamidformmassen nach Anspruch 4, dadurch gekennzeichnet, daß die Komponente II ein Copolymerisat aus Formaldehyd mit Ethylenoxid, Epichlorhydrin, 1,3-Dioxolan oder 5-Phenyl-1,3-Dioxolan ist.

6. Polyamidformmassen nach Ansprüchen 1-5, dadurch gekennzeichnet, daß sie mit 10-60 Gew.-%, bezogen auf die Formmasse, füll- und/oder faserverstärkt sind.

7. Polyamidformmassen nach Ansprüchen 1-6, dadurch gekennzeichnet, daß das Polyamid Polyamid-6 oder Polyamid-6,6 ist.

8. Formkörper aus Formmassen nach Ansprüchen 1-7.

## Claims

1. Flameproof, optionally reinforced and/or filled polyamide moulding compositions which contain, as flameproofing agent combination

I 10-18 % by weight, based on the moulding composition, of melamine and
II 1- 7 % by weight, based on the moulding composition,

of at least one thermoplastic polyacetal and optionally the customary auxiliaries and additives.

2. Polyamide moulding compositions according to Claim 1, characterised in that they contain

12-16 % by weight of component I and
3- 5 % by weight of component II.

3. Polyamide moulding compositions according to Claim 1 or 2, characterised in that component II is a polyformaldehyde or a copolymer of formaldehyde and cyclic ethers or cyclic formals.

4. Polyamide moulding compositions according to Claims 1-3, characterised in that component II is a copolymer of formaldehyde and an epoxide or a cyclic formal with at least 2 O-atoms and $C_2$-$C_5$ in the ring.

5. Polyamide moulding compositions according to Claim 4, characterised in that component II is a copolymer of formaldehyde and ethylene oxide, epichlorohydrin, 1,3-dioxolane or 5-phenyl-1,3-dioxolane.

6. Polyamine moulding compositions according to Claims 1-5, characterised in that they are reinforced with 10-60 % by weight, based on the moulding composition, of fillers and/or fibres.

7. Polyamide moulding compositions according to Claims 1-6, characterised in that the polyamide is polyamide 6 or polyamide 6,6.

8. Moulded articles produced from moulding compositions according to Claims 1-7.

**Revendications**

1. Mélanges à mouler à base de polyamides résistant à la flamme, éventuellement renforcés et/ou additionnés de charges, qui contiennent comme association d'agents d'ignifugeage

I 10 à 18 % en poids, par rapport au mélange à mouler, de mélamine et
II 1 à 7 % en poids, par rapport au mélange à mouler, d'au moins un polyacétal thermoplastique,
et

le cas échéant, les adjuvants et additifs classiques.

2. Mélanges à mouler à base de polyamides suivant la revendication 1, caractérisés en ce qu'ils contiennent

12 à 16 % en poids de composant I et
3 à 5 % en poids de composant II.

-3. Mélanges à mouler à base de polyamides suivant la revendication 1 ou 2, caractérisés en ce que le composant II est un polyformaldéhyde ou un copolymère du formaldéhyde avec des éthers cycliques ou des formals cycliques.

4. Mélanges à mouler à base de polyamides suivant les revendications 1 à 3, caractérisés en ce que le composant II est un copolymère du formaldéhyde avec un époxyde ou un formal cyclique ayant au moins 2 atomes d'oxygène et 2 à 5 atomes de carbone dans le noyau.

5. Mélanges à mouler à base de polyamides suivant la revendication 4, caractérisés en ce que le composant II est un copolymère du formaldéhyde avec l'oxyde d'éthylène, l'épichlorhydrine, le 1,3-dioxolane ou le 5-phényl-1,3-dioxolane.

6. Mélanges à mouler à base de polyamides suivant les revendications 1 à 5, caractérisés en ce qu'ils sont renforcés avec 10 à 60 % en poids de charge et/ou de fibre, par rapport au mélange à mouler.

7. Mélanges à mouler à base de polyamides suivant les revendications 1 à 6, caractérisés en ce que le polyamide est le polyamide-6 ou le polyamide-6,6.

8. Des pièces moulées obtenues à partir des mélanges à mouler suivant les revendications 1 à 7.